# EUROPEAN PATENT APPLICATION

(11) **EP 2 581 824 A1**
(43) Date of publication of application: **17.04.2013**
(21) Application number: 12188349.0
(22) Date of filing: 12.10.2012
(51) Int. Cl.: G06F 9/44, G06F 3/0486

(54) **Smart drag and drop**

(30) Priority: 13.10.2011 US 201161546972 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A method for processing of selectable items on a server is described, comprising the steps of providing a plurality of items, including items within a personalized environment of a first user hosted by the server, each of the plurality of items related to online content; selecting by the first user at least one item of the plurality of items; moving by the first user the at least one selected item into an area associated with a target item of the items within the personalized environment; and processing the at least one selected item on the server, including determining by the server at least one action based on the at least one selected item and the target item, and initiating the determined action, wherein at least one of the at least one selected item and the target item are related to a second user. Furthermore, a server for processing of selectable items is presented.

## Description

### FIELD

The present disclosure relates to a method and a server for processing of items that may be selected by a user on a server and, more particularly, to processing of selectable items related to several users on the server.

In particular, the present disclosure may relate to processing of content related to users, such as assets or activities, via a server, wherein a user may initiate an interaction on a client device that is processed on the server and provided to a personalized environment of the user and preferably to at least one further personalized environment of another user.

### BACKGROUND

Sate of the art techniques for processing of selected items include the Drag and Drop approach, wherein on a personal computer a user may use a mouse to drag some items towards a target and to drop them thereon in order to further process the items. For example, dropping items over a target related to a folder or disk will cause the items to be moved or copied into the respective folder or disk. Also, an item related to a file may be dropped over an item representing an application, causing the application to open the respective file on the local computing device. However, drag and drop is limited to a simplified local processing of files and applications and may neither handle more complex data nor initiate remote processing.

Furthermore, browsers accessing online content from a client device, such as a personal computer or an internet-enabled TV, are limited in their interaction capabilities with regard to the applications running in the browser. Also, copying procedures like drag and drop with regard to the online content, as well as content shared by other users, are not possible.

One reason for these limitations is the large variety and differing representation of content of typical processing systems, such as video, audio, and multimedia files, games, applications, blogs, comments, playlists, specific activities, chats, news, messages, diverse communication media, images or pictures, and even particular users and groups of users. Processing systems, such as online systems, typically handle such content in very different formats, since the respective systems evolved over time and more and more features have been added without creating a common basis for representation of the different content formats. Providing drag and drop in systems handling such variety of content is therefore not feasible and limited to basic types, such as files and applications. Also, the drag and drop approach is limited to a local processing by a single user.

In view of the above, one object of the present disclosure is to improve the processing of selectable items. In particular, one object of the present disclosure is to enable a flexible processing of selectable items related to a plurality of users of an online system.

### SUMMARY

The problem is solved by a method and a system for processing of selectable items as defined in the independent claims. Furthermore, a computer-readable medium, a client, and a computer system are defined. Preferred embodiments are defined in the corresponding dependent claims.

The method for processing of selectable items on a server according to the present disclosure comprises the step of providing a plurality of items, including items within a personalized environment of a first user hosted by the server, wherein each of the plurality of items is related to online content. Furthermore, the method comprises selecting by the first user at least one item of the plurality of items and moving by the first user the at least one selected item into an area associated with a target item of the items within the personalized environment. In addition, the method comprises processing the at least one selected item on the server, including determining by the server at least one action based on the at least one selected item and the target item, and initiating the determined action, wherein at least one of the at least one selected item and the target item are related to a second user.

The first user may use a client device to connect to the server and receive a representation of his personalized environment including the items representing the online content. In addition, the user may be provided with items on his client device. The first user may select and move at least one of the items onto a target item or a respective target area defined by the target item in the personalized environment on the server, for example by using one or more push-buttons or a touch-sensitive surface of an interaction device in order to select the items and by changing a relative position on or of the interaction device, which may be directly related to the movement of the selected items. By selecting and moving the items in relation to the target item, the first user initiates a further processing of the selected items on the server.

Each item and the related online content is preferably organized in a container, which may be referred to as a seed, including main data and at least one metadata attached to the main data. A seed may be used to represent online content or content data throughout an online system, a related cloud, or a server environment in a way, which enables a unified management and handling of the content data. Each seed may store the respective content, such as a blog, a video file, live real-time content, other media data, a representation of a user or a representation of a group of users, or other objects. Correspondingly, all kinds of online content may be handled in the same container data structure or seed. Furthermore, each seed may stores basic parameters or metadata and additional parameters or metadata. A seed may be persistent in time and its size may grow or shrink in accordance with the content and metadata.

The metadata attached to each seed may define who is allowed to interact with the seed, what the seed is allowed to do, who created the seed, and other information for handling and interacting. A respective management system may, therefore, analyze the metadata in order to determine suitable actions for the seed, which may be automatically provided to users of the server in conjunction with the seed.

Basic parameters or metadata of a seed may include at least one of a unique ID, an identification of a user, who created the seed, as well as a list of recipients that may be other seeds addressed by the seed, such as a single recipient seed or a group of recipient seeds, an indication of the type of the seed, as well as an indication of actions which are assigned to the seed, such as social or content-based actions, and combinations thereof. Further basic parameters may include an identification of an owner, which may be the current user managing the seed, link and connect permissions, a status of the seed, a future date, which may define when the seed will be visible online, an expiration date, other suitable information, and combinations thereof.

A seed can be related to other seeds, such as parent, child, and neighbour seeds or other hierarchically or technically organized relationship structures. Seeds may be coupled to each other via links, connections and/or shares. For example, if a user links to a seed, the user may establish a passive, asymmetrical link to the seed. The user will be notified about any changes and/or updates of the linked seed. A connection to a seed establishes a symmetrical connection to the seed, where both seeds, the seed representing the user connecting and the seed being connected, are aware of the connection. Furthermore, a user can define that a seed is to be shared with certain target seeds representing, for example, other individual users or a group of users. For example, a user may desire to share the content of his/her seed with a certain group of other users. In addition, seeds may be coupled across one or more online systems, servers and clouds using one or more seed servers, which may be provided by different seed-server operators.

Each seed may explicitly allow particular users to perform certain actions as defined by the basic parameters, for example, content actions directed at a use of the seed content, and social actions directed at an initiation of social interactions with the seed. Hence, an element representing an offer according to an embodiment may, for example, be created as a seed which may be stored and managed by a corresponding online system and which may enable users to interact with the element.

Accordingly, the main data may represent the online content and the metadata may define predetermined actions, which may be invoked on the online content. Thus, irrespective of a type of the related online content, each item may be represented by and/or related to a seed, thereby providing a uniform basis for processing of the selected items with regard to the target item. Also, since a seed may represent a large variety of online content, including diverse files, applications, games, online activities, as well as users and groups of users, the items and their processing are not restricted to a certain type of online content. Furthermore, seeds may be connected and/or linked to other seeds and may communicate with each other, thus forming a network of seeds. The seed representing an online content created by a user may, for example, be connected to a seed representing the user or a group the user belongs to. Therefore, the items related to the online content represented by seeds may be related to further users, such as the second user, thereby enabling a processing of online content shared or owned by a plurality of users over a distributed network.

Thus, based on the selected items and the target item, as well as based on a relation of at least one of the items to the second user, a suitable action is determined and initiated in order to process the selected items.

The inventive method allows for a flexible processing of selectable items related to a plurality of users on a server. It therefore improves the handling of online content, speeds-up the processing, and simplifies the management of online content associated with a plurality of users.

In a preferred embodiment of the present disclosure, the method further comprises de-selecting by the user the at least one selected item within the area of the target item. Such de-selecting may be performed by dropping the selected items on the area of the target item, for example by releasing a push-button of an interaction device. However, de-selecting may alternatively be performed by moving the selected items within the area and waiting for a certain period of time, after which the selected items may be automatically de-selected and further processed on the server. In particular, de-selecting the items within the target area initiates the further processing of the items on the server.

According to a particularly preferred embodiment of the present disclosure, each item includes data defining one or more actions, which may be invoked on the item with regard to a target item. For example, the online content related to each item may be represented by a container, such as a seed, specifying available actions, which may be invoked on the online content. The method may further analyze the available actions for each selected item alone or for all of the selected items with regard to the available actions of the target item, such as by forming a common subset of the available actions. The method may also further analyze the selected items if the determination does not lead to a suitable action, such as an empty common subset of actions, and may, for example, try to mutually exclude one of the items of the selected items in order to determine at least one suitable action. If the determination results in multiple actions which may be invoked on the selected items with regard to the target item, the method may select one of the actions at random, prompt the first user to choose and confirm an action, and or may apply a weighting of the actions, for example by choosing an action related to one of the selected items, which has been, for example, selected first by the first user.

Preferably, each item is associated with a weight, wherein the action is further determined based on the at least one weight of the at least one selected item. The weight of each item may be defined in the metadata of the container, such as a seed, representing the related online content. Also a weighting of the items may be computed in relation to the personalized environment, for example based on an ownership of the items and the related content, and a distance metric of the owner of the item with regard to the first user. For example, the users may be represented by seeds and a distance metric may be defined by a length of a shortest path within the seed network from the seed representing the owner and the seed representing the first user. However, it is to be understood that the present disclosure is not restricted to a particular weighting or a distance metric.

According to another embodiment of the present disclosure, said processing further includes sending a request to the second user comprising data about at least one of the determined action, the at least one selected item, the target item, and the first user.

Preferably, said processing further includes receiving by the server a reply from the second user on the request and initiating the determined action based on the reply. For example, the second user may be required to confirm the determined action, which is to be initiated on the selected items with regard to the target item. For example, the second user may be asked to confirm the action, if the action involves a modification of one of the selected items being owned by the second user. Also, the second user may be asked to confirm the action, if it requires any further interaction of the second user, such as entering a chat with the first user or joining the first user in a game session. The second user may also not respond to the request or may deny the requested action. Also, the second user may define a set of actions that may be confirmed automatically, such as defining such actions in a seed representing the second user.

Preferably, said initiating the action includes initiating an interaction between the first user and the second user. For example, an interaction between the first and the second users, such as a chat, may be initiated by the first user by selecting an item representing the second user and by moving said item onto an item representing a chat channel owned by the first user. Similarly, the first user may select and move the item representing the chat channel onto the item representing the second user. However, it is to be understood that the present disclosure is not limited to initiating a chat only. Rather any other online interaction between two users may be initiated, for example a joint participation in an online game session or interaction with a live event hosted by an online interactive environment.

In yet another embodiment of the present disclosure, the target item represents an interaction between the first user and the second user and said processing further includes modifying the interaction to another interaction between the first user and the second user based on the at least one selected item, and initiating the modified interaction. The target item may for example represent a live chat session between the first and the second user. The first user may, however, modify the kind of interaction into another interaction by selecting an item related to the other interaction and moving said item onto the target item. For example, the first user may select an item representing an online game and move the item onto the target item representing the chat, thereby modifying the chat into an invitation to the users to participate in the online game. Obviously, further items representing other kinds of interaction may also be selected in order to modify the interaction defined by the target item.

According to a particularly preferred embodiment of the present disclosure, said initiating the action includes sharing content, related to at least one of the at least one selected item and the target item, with the second user. For example, the first user may select an item representing the content which he wants to share, and may move the item onto a target item representing the second user. Also, the first user may move the item onto a target item representing a group of users, including the second user. In this case, however, the content may be shared with all members of the group.

According to another embodiment of the present disclosure, at least some of the at least one selected item and the target item are related to one or more further users and wherein said processing further includes sending a request to the one or more further users comprising data about at least one of the determined action, the at least one selected item, the target item, and the first user, and receiving by the server at least some replies from the one or more further users on the request, wherein the initiation of the determined action is delayed until a number of replies has been received. Either one of the selected items or the target item may relate to a group of users or some of the selected items or the target item may relate to different users. In each case, the request is sent independently to each user and the server waits until a number of replies related to the requests are received. For example, the server may wait until three other users confirmed the request in order to initiate the action, for example an online game, whenever the online game requires four players (including the first user) to participate in a match. The server may also initiate the particular action for a second and each subsequent user immediately after it has received the corresponding confirmation. For example, the first user may invite further users to watch a certain video content by selecting and moving the corresponding item onto an item representing a group of users. Whenever a user of that group confirms the action, the server may start playing the video content to that user.

In yet another preferred embodiment of the present disclosure, the method further comprises creating a new item related to the determined action and providing the new item within the personalized environment of the first user. The new item may be created as soon as the action has been initiated. The new item may be provided directly in proximity to the target item within the personalized environment. Also, the new item may replace the target item entirely if, for example, the kind of interaction being represented by the target item has been modified by the action.

Preferably, the new item is further provided within a personalized environment of the second user. For example, a new game session initiated by the first user by selecting an item representing a game and moving said item onto a target item representing a group of users may result in a new item representing the game session, which may be provided to each personalized environment of each participant of the game session.

In a further embodiment of the present disclosure, the content related to the items is an online content, preferably at least one of a video, an audio file, a game, an application, a blog, a comment, a playlist, an activity, a chat, news, a message, a communication media, an image or picture, a user, and a group of users.

According to a preferred embodiment of the present disclosure, the server hosts an interactive environment providing personalized environments to users, preferably a social network or an online gaming environment.

Furthermore, a computer-readable medium according to the present disclosure has instructions stored thereon, said instructions, when installed and executed on a computing device, causing said computing device to perform a method according to the present disclosure.

The instructions on the computer-readable medium may, for example, be read, installed and executed on a server, thereby configuring the server to provide a plurality of items within personalized environments to users, wherein each of the plurality of items is related to online content. Furthermore, the server may enable a first user within a respective personalized environment to select at least one item, of items local to the first user and of the plurality of items, and to move the at least one selected item into an area associated with a target item of the plurality of items within the personalized environment. The server may further be configured to process the at least one selected item, including determining at least one action based on the at least one selected item and the target item, and initiating the determined action, wherein at least one of the at least one selected item and the target item are related to a second user.

It is to be understood that the computer-readable medium need not be in direct physical contact with the server in order to read the instructions embodied thereon. Rather, the instructions may also be read from the medium and uploaded to the server in order to configure the server to perform the method, according to an embodiment of the present disclosure.

Furthermore, a server for processing of selectable items according to the present disclosure comprises a personalized environment of a first user, including a plurality of items, each of the plurality of items related to online content; means for selecting at least one item of items local to the first user and of the plurality of items within the personalized environment, said means being accessible by the first user; means for moving the at least one selected item into an area associated with a target item of the plurality of items within the personalized environment, said means being accessible by the first user; and a processing module configured to process the at least one selected item, including determining at least one action based on the at least one selected item and the target item, and initiating the determined action, wherein at least one of the at least one selected item and the target item are related to a second user. The inventive server therefore enables a flexible handling of online content and simplifies interaction related to the online content between a plurality of users.

In a preferred embodiment of the present disclosure, the server further comprises means for de-selecting the at least one selected item within the area of the target item, said means being accessible by the first user.

According to another preferred embodiment of the present disclosure, the processing module of the server is configured to process the selected at least one item, wherein said processing further includes sending a request to the second user comprising data about at least one of the determined action, the at least one selected item, the target item, and the first user. In yet another embodiment of the present disclosure, the processing module of the server is configured to process the selected at least one item, wherein said processing module is further configured to receive a reply from the second user on the request and initiate the determined action based on the reply.

In a particularly preferred embodiment of the present disclosure, said initiating the action includes initiating an interaction between the first user and the second user.

According to another embodiment of the present disclosure, the target item represents an interaction between the first user and the second user and said processing module is further configured to modify the interaction to another interaction between the first user and the second user based on the at least one selected item, and initiate the modified interaction.

In a particularly preferred embodiment of the present disclosure, said initiating the action includes sharing content related to at least one of the at least one selected item and the target item with the second user.

In yet another preferred embodiment of the present disclosure, at least some of the at least one selected item and the target item are related to one or more further users and said processing module is further configured to send a request to the one or more further users comprising data about at least one of the determined action, the at least one selected item, the target item, and the first user, and receive at least some replies from the one or more further users on the request, wherein the initiation of the determined action is delayed until a number of replies has been received.

Preferably, the server further comprises means for creating a new item related to the determined action and providing the new item within the personalized environment of the first user.

In a preferred embodiment of the present disclosure, the new item is further provided within a personalized environment of the second user.

In a preferred embodiment of the present disclosure, the server further hosts an interactive environment providing personalized environments to users, preferably a social network or an online gaming environment.

In addition, a client for processing of selectable items on a server according to the present disclosure is provided, including means to connect to a server according to the present disclosure and an interface to enable interaction of a user with corresponding means of the server. The client may, for example, be any suitable interaction device such as a personal computer, a laptop computer, a tablet PC, a mobile device, a smart phone and such. The client may comprise a communication interface to connect via any suitable network, such as the Internet or a mobile phone network, to the server. The client may further comprise input means, such as a mouse, a touch-sensitive area and others, to enable a user to enter input. The client may be configured to enable interaction with the personalized environment provided to the user, such as by executing an application rendering the personalized environment and transferring the input of the user back to the server.

Preferably, the client executes a browser to access the server and to interact with the personalized environment of the user.

Furthermore, a computer system, according to the present disclosure, comprises a server, according to the present disclosure, enabling access of one or more users to the server.

### BRIEF DESCRIPTION OF THE DRAWINGS

Further details and characteristics of the present invention are described in exemplifying embodiments of the invention with reference to the figures of the accompanying drawings, in which:
Fig. 1 shows a method according to an embodiment of the present invention; and
Fig. 2 shows a schematic illustration of a server according to an embodiment of the present invention.

### DETAILES DESCRIPTION

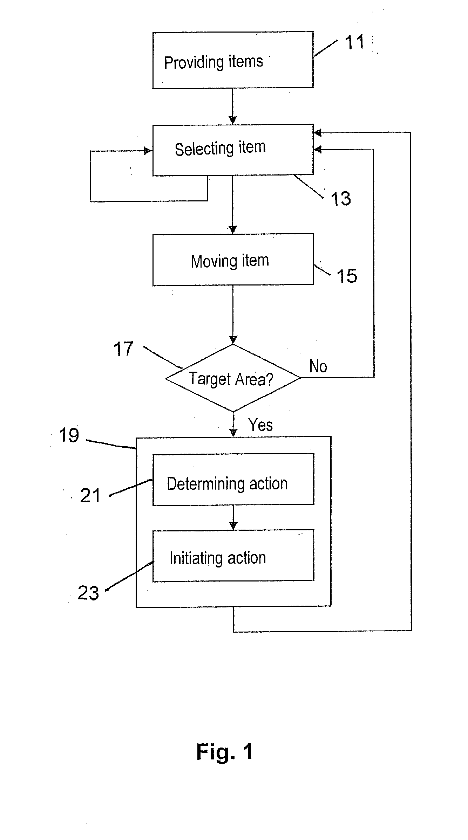

Fig. 1 shows a method according to an embodiment of the present invention. At block 11, a plurality of items is provided, including items provided by a server within a personalized environment of a first user. Each of the plurality of items is preferably related to online content. The first user may thereafter select at least one item of the plurality of items at block 13. The first user may repeat the selection and/or change the selected items at block 13. Thereafter, the first user moves the at least one selected item at block 15.

At block 17, it is determined if the selected items have been moved into an area associated with a target item of the items within the personalized environment or if otherwise the movement has been aborted without moving the selected items into that area. If movement has been aborted, the method loops back to block 13, enabling the first user to further select items. If the selected items have been moved to the target item within the personalized environment and said motion has not been aborted, the at least one selected item is processed on the server at block 19. The processing of block 19 includes determining by the server at least one action based on the at least one selected item and the target item in block 21 and initiating the determined action in block 23. Thereafter, the first user may continue the selection of further items at block 13.

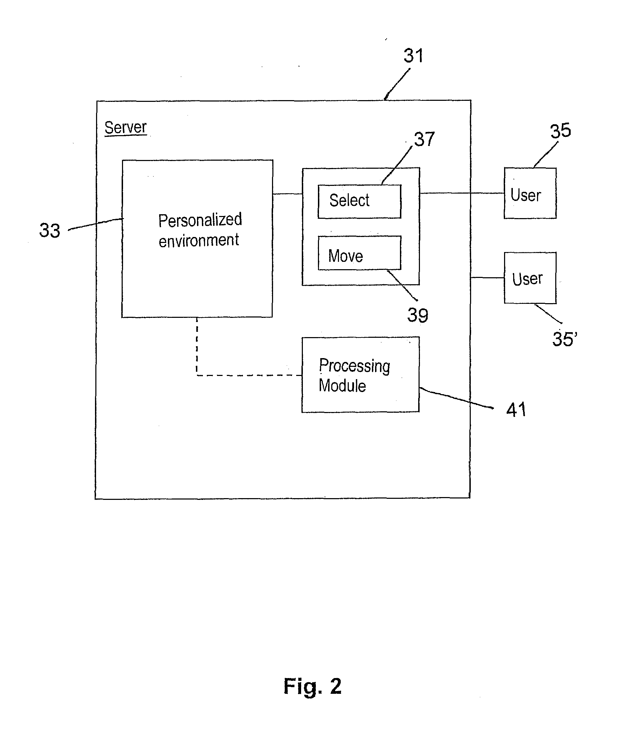

Fig. 2 shows a schematic illustration of a server according to an embodiment of the present invention. The server 31 provides a personalized environment 33 of a first user 35 including a plurality of items, each of the plurality of items related to online content. The server 31 may also provide access and personalized environments (not shown) to further users, such as user 35'. The server 31 comprises means 37 for selecting at least one item. The selected items may be items of the plurality of items within the personalized environment, as well as items that are local to the user 35, for example related to content present at a client device of the user 35. The server 31 further comprises means 39 for moving the at least one selected item, wherein the means 37, 39 are both accessible by the first user 35. The first user 35 may use means 37 and 39 to move the selected items into an area associated with a target item of the items within the personalized environment and/or create a new selections of items. The server 31 further comprises a processing module 41 configured to process the at least one selected item that has been moved into the area of the target item within the personalized environment, wherein the processing module 41 determines at least one action based on the at least one selected item and the target item, and initiates the determined action.

It is to be understood that the server 31 also provides additional personalized environments (not shown) for other users, such as the user 35'. The items presented within one personalized environment, such as personalized environment 33, may also be presented in other personalized environments, depending on the relation of the content represented by the item with users 35, 35'. For example, a user may be the owner of an online content and, consequently, a corresponding item may be shown in the personalized environment of the user as soon as the online content has been uploaded to the server 31. Other users may thereafter connect or link to the online content. In this case, an item representing the online content is also presented within the personalized environments of the other users. Thus, items in a personalized environment, such as personalized environment 33, may relate to a plurality of users 35, 35' and the server may initiate an action between the users 35, 35', whenever such items are selected and moved, or are used as a target item.

The server 31 allows users 35, 35' to share online content located on their devices with other users 35, 35', for example via an application running in a web browser on the user's device. The server 31 may also allow interaction between users 35, 35' and/or applications, for example, applications being executed in the web browser, which are interpreted by the server 31.

For example, the user 35 may either drag an item, such as an icon representing a content on his device, e.g., on the desktop, in a file management application, in the web browser or such, into the personalized environment 33 hosted by the server 31, which may be displayed by an application running inside the web browser or running as a standalone application. By dropping the item within the personalized environment 33, the control is transferred to the server 31 that may, for example, be connected to the users 35, 35' via the Internet or any other suitable network connection. The server 31 may determine an action that is to be invoked on the dropped item. For example, the server 31 may initiate an interaction with another user, such as user 35', connected to the server 31. The server 31 may also enable the content related to the dragged item to be shared with another user, such as user 35', or a user group. The server 31 may also initiate other actions like storing a copy of the content related to the dragged item online on the server 31.

Even though the processing has been described with dragging and dropping of an item local to the user 35, it is to be understood that similarly an item within the personalized environment 33 may be selected and moved (dragged) and eventually de-selected or dropped into a target area of a target item, which may trigger a similar behaviour of the server 31. Thus, the server 31 enables a flexible handling of content and online content and allows for a large variety of actions initiated on the selected items and the target item, comprising, however not limited to, a user-to-user interaction, user-to-content interaction, content-to-user interaction, application-to-user interaction, or content-to-application interaction, etc.

According to an exemplifying embodiment of the present disclosure, user A, such as the user 35 of Fig. 2, may initiate a game session with his friend, user B, for example the user 35'. User A may log into a web portal, for example hosted by the server 31, where he can launch the game and is able to observer an online status of user B. User A may select an item related to the launched game, such as a game icon, which may be placed in his web portal, such as the personalized environment 33. User A may further move the selected item onto an item or icon representing user B.

On de-selecting or dropping the game icon on the icon of user B, the server 31 may determine a suitable action from the game icon and the icon of user B. For example, the server 31 may parse a container data structure, such as a seed, that stores the content related to the items. Based on the results, the server 31 may further send an invitation from user A to user B to participate in a game session. The invitation may allow for several responses, like "join the game," "decline the invitation," "propose a later time," and others. Obviously, other response possibilities may be used, in particular with regard to other actions and applications to be performed. User B may decide to start the game by clicking on the "join the game" button. This information is sent back to the server 31, which may automatically start the game application for both users either on the server 31 or distributed on both user devices. In this case, the server 31 may transfer connection information of both users to a game server in order to instantly connect both users inside the game.

According to a further exemplifying embodiment of the present disclosure, a user, such as user 35 of Fig. 2, may share content with other users, such as the user 35'. For example, user 35 may create an image or other media content he wants to share online. User 35 may then drag the image (or a respective item or icon representing the image) from his desktop into a browser window, which represents the personalized environment 33 provided on the server 31. User 35 may drag the image onto a target item representing a share box. The share box may represent a service providing an online place where any users of the server 31 may store and manage uploaded content. However, it is to be understood that the share box is also treated by the system as online content. When the item representing the image is dropped on the item representing the share box, the server 31 uploads the image to the server 31 and stores the image online within the share box, where it may be accessed by any other user, such as user 35', having access to the share box of user 35.

Alternatively, user 35 can share the image to a specific user, such as user 35', directly by dragging the image item onto the item representing user 35' within the personalized environment 33 presented inside the browser. The server 31 may then upload the image and send it to the personalized environment of user 35'. User 35' will preferably be informed about the action of user 35 and is enabled to view the image. User 35 may also define rules related to manipulation of the shared content, for example, user 35 may allow others to manipulate the image, such as copying, opening and editing of the content, or may restrict particular manipulations.

In another exemplifying embodiment of the present disclosure, a user of an online service may initiate an activity between users, such as invite other users to chat. For example a user A may want to start a chat with two of his friends, user B and user C. Therefore, user A may select the two items representing his friends, respectively. User A may drag both items onto a target item, such as a "Chat" icon, onto another designated "live activity" area, or into a box, in order to initiate the corresponding action, in this case a chat between users A, B and C. The server of the online service, such as server 31 of Fig. 2, recognizes the selected items as referring to users B and C and, based on the target item, transfers an invitation for a chat to both users.

Users B and C will be informed about the invitation and may choose to join or to refuse the invitation. The corresponding reply is sent to user A and the chat application is started by the server if at least one other user decides to join the chat. Obviously, user A may decide to invite more that two other users to participate in the chat, in which case the invitation will be sent to all selected participants.

In another exemplifying embodiment of a method according to the present disclosure, an activity between users related to an item may be changed into another. For example, a chat session may be modified into a game session. As described above, a user A may, for example, start a chat with another user B by selecting and moving an item related to user B onto an item representing a chat channel. Alternatively, user A may select both items, the item related to user B and the item related to the chat channel, and move the selected items onto a further target item, for example, an item referred to as an activity box, which is related to content that only indicates to launch an action as defined by the selected items.

After initiation of the chat between users A and B, a new icon representing the chat may be included in the personalized environments of both users. Subsequently, user A may want to start a game session with user B. In order to start the game session, user A may select and move an item representing the desired game onto the icon representing the already open chat channel, window, or box. The server may interpret a de-selection or dropping of the selected items as a command to start the game with all users participating in the chat and may launch the game session with these users. The server may furthermore create a new item related to the game session, such as a seed representing the game session with the two users. The existing item related to the chat, such as a chat seed, may remain within the personalized environments of the users, but may also be deactivated, since it does not represent the current main activity of the users. Still, both users can use both seeds simultaneously. As an alternative, the new item representing the game session may entirely replace the existing item representing the chat channel.

In yet another exemplifying embodiment of a method according to the present disclosure, a start of a game session is delayed until a number of players confirm participation. For example, a user A may want to start a game session of a multiplayer game with his friends, such as users B, C, and D. User A may select and move an item representing the game session, such as a game icon, onto a target item representing himself. This processing may be interpreted by the system as a start of a game session defined by the game icon. As the game is a multiplayer game, the game application will ask user A to specify how many players are to be expected, for example by providing user A with a slider or a similar method to enter a number of players. User A may, for example, define an amount of four players to participate in the multiplayer game session. However, it is to be understood that this number is only provided as an example and that any suitable number of players may be specified to participate in the game session.

After specifying the number of players, the item representing the game session may be updated to accept further items related to users who have been invited to join the game session. For example, user A may select and move up to three items representing users B, C, and D onto the item representing the game session, for example, a game session box or window. With the new configuration of the game session item, the system may immediately determine that the new users are to join the game session. Obviously, user A may also immediately select and move the items representing all users that he wants to invite to participate onto the item representing the game session, in which case the game application may determine the required number of players from the number of items initially dropped on the game icon.

The system may further invite users B, C, and D to confirm the participation, for example allowing the users to specify if they want to accept or deny the invitation, or allowing any other option to react on the invitation. For example, users B and C may accept the invitation and may be added to the list of waiting players for the game session. Yet, user D may deny the invitation, in which case user A is notified about the negative reply and may continue to select items related to other online users, such as other friends, or users unknown to user A, wherein the respective items of the other online users may be provided in the personalized environment of user A as users who are online and interested in participating in a game session. The system may start the game session whenever the initially specified number of players has been reached. However, user A may decide to immediately start the game session with a reduced number of players, for example with just three active players, users A, B, and C.

Depending on the game settings, users B and C may or may not be allowed to add further users to the game session, for example by selecting and moving items related to further users in their own respective personalized environments onto a newly created item in their personalized environments representing the game session, which has preferably been created after they accepted the invitation to join the game session. If further players have been added by already invited users, user A may still be asked to confirm initiation of the game session after all requirements to start the game, such as the required number of players, have been met.

In particular, the inventive approach, according to embodiments of the present disclosure, enables a server to interpret a process of selecting and moving items to a target item, such as dragging and dropping items, in a way which initiates specific activities combining online content, such as users, content, and applications. In particular, all activities, interactions, users, content, and applications are represented by items enabling the same processing irrespective of the related content. Rather, the items may refer to an abstract representation of online content, such as activities, interactions, users, content and applications, being organized in containers, also referred to as seeds, comprising main data defining the online content, as well as metadata defining behaviour, capabilities and characteristics of the online content. Thus, the inventive processing may be implemented by analyzing and interpreting the seeds related to the selected items and the seeds representing the target item. Based on the analysis, the method according to an exemplifying embodiment of the present disclosure may create new items corresponding to new seeds, seed behaviours, or seed actions.

Even though methods according to embodiments of the present invention have been described with reference to exemplifying embodiments, it is to be understood that particular processing steps may be modified, added and omitted without leaving the scope of the present invention. Also, the processing steps may be performed in a different order from the examples described.

Furthermore, it is to be understood that many modifications may be provided to particular embodiments of the disclosure without leaving the scope of the invention. In particular, the invention may be practiced within the scope of the claims differently from the examples described and the described features and characteristics may be of importance for the invention in any combination.

## Claims

1. A method for processing of selectable items on a server, comprising the steps of:
providing a plurality of items, including items within a personalized environment of a first user hosted by the server, each of the plurality of items related to online content;
selecting by the first user at least one item of the plurality of items;
moving by the first user the at least one selected item into an area associated with a target item of the items within the personalized environment; and
processing the at least one selected item on the server, including determining by the server at least one action based on the at least one selected item and the target item,
and initiating the determined action, wherein at least one of the at least one selected item and the target item are related to a second user.

2. The method according to claim 1, further comprising de-selecting by the user the at least one selected item within the area of the target item.

3. The method according to claim 1 or 2, wherein each item includes data defining one or more actions, which may be invoked on the item with regard to a target item, and/or wherein each item is associated with a weight, wherein the action is further determined based on the at least one weight of the at least one selected item.

4. The method according to one of the preceding claims, wherein said processing further includes sending a request to the second user comprising data about at least one of the determined action, the at least one selected item, the target item, and the first user, preferably wherein said processing further includes receiving by the server a reply from the second user on the request and initiating the determined action based on the reply.

5. The method according to one of the preceding claims, wherein said initiating the action includes initiating an interaction between the first user and the second user, and/or sharing content related to at least one of the at least one selected item and the target item with the second user.

6. The method according to one of the preceding claims, wherein the target item represents an interaction between the first user and the second user and wherein said processing further includes modifying the interaction to another interaction between the first user and the second user based on the at least one selected item, and initiating the modified interaction.

7. The method according to one of the preceding claims, wherein at least some of the at least one selected item and the target item are related to one or more further users and wherein said processing further includes sending a request to the one or more further users comprising data about at least one of the determined action, the at least one selected item, the target item, and the first user, and receiving by the server at least some replies from the one or more further users to the request, wherein the initiation of the determined action is delayed until a number of replies has been received.

8. A computer-readable medium having instructions stored thereon, wherein said instructions, when installed and executed on a computing device, cause said computing device to perform a method according to one of the preceding claims.

9. A server for processing of selectable items, comprising:
a personalized environment of a first user including a plurality of items, each of the plurality of items related to online content;
means for selecting at least one item of items local to the first user and of the plurality of items within the personalized environment, said means being accessible by the first user;
means for moving the at least one selected item into an area associated with a target item of the plurality of items within the personalized environment, said means being accessible by the first user; and
a processing module configured to process the at least one selected item, including determining at least one action based on the at least one selected item and the target item,
and initiating the determined action, wherein at least one of the at least one selected item and the target item are related to a second user.

10. The server according to claim 9, further comprising means for de-selecting the at least one selected item within the area of the target item, said means being accessible by the first user.

11. The server according to claim 9 or 10, wherein each item includes data defining one or more actions, which may be invoked on the item with regard to a target item and/or wherein each item is associated with a weight, wherein the action is further determined based on the at least one weight of the at least one selected item.

12. The server according to one of the claims 9 to 11, wherein the target item represents an interaction between the first user and the second user and wherein said processing module is further configured to modify the interaction to another interaction between the first user and the second user based on the at least one selected item, and initiate the modified interaction.

13. The server according to one of the claims 9 to 12, further comprising means for creating a new item related to the determined action and providing the new item within the personalized environment of the first user, and preferably further providing the new item within a personalized environment of the second user.

14. The server according to one of the claims 9 to 13, hosting an interactive environment providing personalized environments to users, preferably a social network or an online gaming environment.

15. A client for processing of selectable items on a server, including means to connect to a server according to one of the claims 9 to 14 and an interface to enable interaction of a user with corresponding means of the server.
